# EUROPÄISCHE PATENTSCHRIFT

(11) **EP 3 500 802 B1**
(45) Veröffentlichungstag und Bekanntmachung des Hinweises auf die Patenterteilung: **04.11.2020**
(21) Anmeldenummer: 17780623.9
(22) Anmeldetag: 20.09.2017
(51) Int. Cl.: F24F 5/00, F24F 7/08, F24F 13/14, F24F 11/00, F24F 13/02, F24F 3/044

(54) **BELÜFTER GROSSER RÄUME UND HALLEN**
AERATOR FOR BIG ROOMS AND HALLS
AÉRATEUR POUR GRANDES SALLES ET HALLS

(30) Priorität: 14.10.2016 DE 102016012269
(43) Veröffentlichungstag der Anmeldung: 26.06.2019
(73) Patentinhaber: Menerga GmbH, 45472 Mülheim an der Ruhr (DE)
(72) Erfinder: BERGER, Ralph, 45968 Gladbeck (DE)
(74) Vertreter: Cohausz Hannig Borkowski Wißgott
(86) Internationale Anmeldenummer: PCT/EP2017/001113
(87) Internationale Veröffentlichungsnummer: WO 2018/068879

(56) Entgegenhaltungen:
- WO-A2-2012/011813
- DE-A1- 4 343 611
- JP-A- H09 159 207

## Beschreibung

Die Erfindung betrifft eine Anlage zum Belüften großer Räume und Hallen insbesondere von Schwimmhallen mit einem Abluftkanal mit mindestens zwei zueinander parallel angeschlossenen Abluftlüftern, mit einem Zuluftkanal in Strömungsrichtung mit mindestens zwei zueinander parallel angeschlossenen Zuluftlüftern, mit einem Umluftkanal, der den Abluftkanal in Strömungsrichtung hinter den ersten Abluftlüftern mit dem Zuluftkanal vor den Zuluftlüftern verbindet, und mit einer steuerbaren Umluftklappe im Umluftkanal.

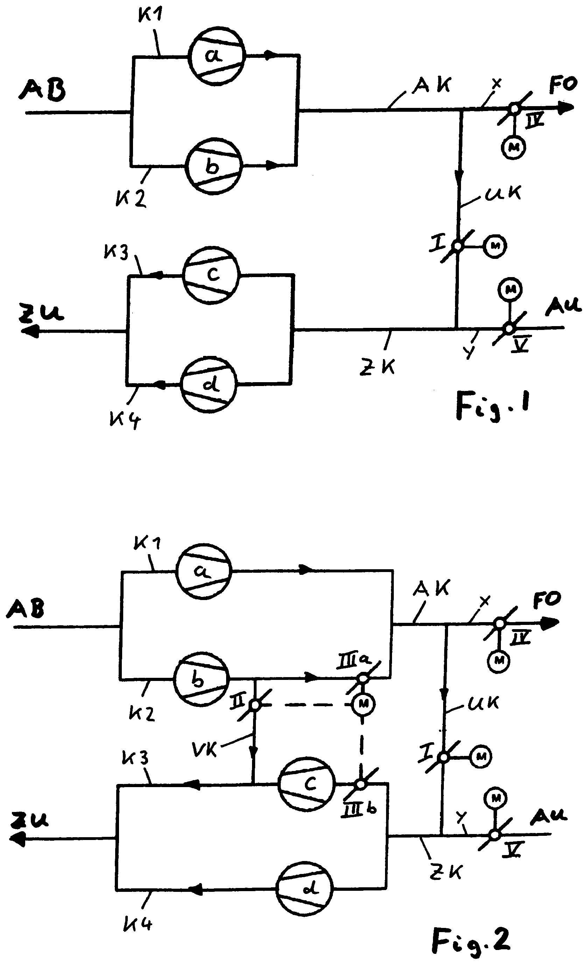

Bei solchen Anlagen ist es bekannt, die Abluft durch mindestens zwei parallel angeordnete Lüfter und die Zuluft durch mindestens zwei parallel angeordnete Lüfter jeweils als Doppellüfter zu bewegen und die beiden Luftströme durch einen eine Drosselklappe aufweisenden Umluftkanal zu verbinden, über den ein Teil der Abluft in das Gebäude zurückströmt, wie dies Fig. 1 zeigt. Eine solche Belüftungsanlage bewegt große Luftmengen durch die ständig laufenden mindestens vier Lüfter. Die Druckschrift WO 2012 011 813 A2 offenbart eine Anlage gemäß dem Oberbegriff des Anspruchs 1.

Aufgabe der Erfindung ist es, eine Anlage der erfindungsgemäßen Art und das durch sie durchgeführte Verfahren so zu verbessern, dass erheblich an elektrischer Energie gespart wird, bei gleichem Wirkungsgrad und einfacher Konstruktion.

Diese Aufgabe wird erfindungsgemäß dadurch gelöst,
- dass zwischen den Abluft- und Zuluftlüftern ein Verbindungskanal angeordnet ist, der mit einem Ende auf der Druckseite eines der beiden Lüfter des Abluftkanals und mit dem anderen Ende auf der Druckseite eines der beiden Lüfter des Zuluftkanals angeschlossen ist,
- dass im Verbindungskanal eine zweite Luftklappe angeordnet ist,
- dass in dem Teil des Abluftkanals, der die Anschlussstelle des Verbindungskanals aufweist, eine dritte Luftklappe hinter der Anschlussstelle angeordnet ist,
- dass in dem Teil des Zuluftkanals, der die andere Anschlussstelle des Verbindungskanals aufweist, eine vierte Luftklappe vor dem Zuluftlüfter angeordnet ist.

Durch den Verbindungskanal zwischen den Abluft- und Zuluftlüftern wird eine ähnliche Wirkung erzielt wie durch den bekannten Umluftkanal zwischen dem Abluftkanal und dem Zuluftkanal. Hierbei kann aber einer der beiden Zuluftlüfter still stehen, so dass elektrische Energie erheblich eingespart wird.

Vorzugsweise wird die erfindungsgemäße Anlage wie folgt betrieben:
- Die zweite Luftklappe wird geöffnet,
- die dritte und vierte Luftklappe werden geschlossen,
- der erste Zuluftlüfter bleibt außer Betrieb, so dass ein erheblicher Anteil der Abluft über den Verbindungskanal zum Gebäude zurückgeführt wird.

Hierbei ist vorzugsweise die erste Umluftklappe geschlossen oder teilweise geöffnet und insbesondere geregelt. Auch kann hierbei der restliche, nicht über den Verbindungskanal strömende Teil der Abluft zum Fortluftausgang über den ersten Abluftlüfter strömen, der parallel zu dem zweiten Abluftlüfter liegt, hinter dem der Verbindungskanal abzweigt. Ferner kann hierbei die erste Umluftklappe geschlossen oder stark drosselnd eingestellt sein.

Ausführungsbeispiele der Erfindung werden im Folgenden näher beschrieben. Es zeigen
- Fig. 1: eine Belüftungsanlage nach dem Stand der Technik,
- Fig. 2: eine erfindungsgemäße Version der Belüftungsanlage.

Zum Klimatisieren großer Hallen insbesondere von Hallenbädern werden Lüftungsanlagen verwendet, die einen Abluftkanal AK und einen Zuluftkanal ZK aufweisen. Der Abluftkanal AK verbindet den Abluftausgang AB der Halle mit dem Fortluftausgang FO und der Zuluftkanal ZK verbindet den Außenlufteingang AU mit dem Zulufteingang ZU der Halle. In beiden Kanälen AK, ZK befinden sich jeweils zwei oder mehr Doppellüfter, d. h. im Abluftkanal AK sind mindestens zwei Abluftlüfter a, b zueinander parallel geschaltet und im Zuluftkanal ZK sind mindestens zwei Zuluftlüfter c, d zueinander parallel geschaltet.

Der Abluftkanal AK ist mit dem Zuluftkanal ZK durch einen Umluftkanal UK verbunden, wobei ein Ende des Umluftkanals UK an den Abluftkanal zwischen den Abluftlüftern a, b und dem Fortluftausgang FO und das andere Ende des Umluftkanals UK an den Zuluftkanal ZK zwischen den Zuluftlüfter c, d und dem Außenlufteingang AU angeschlossen ist. Im Umluftkanal UK befindet sich eine steuerbare Umluftklappe I, durch die die Abluftmenge bestimmt wird, die zum Zuluftkanal ZK zurückströmt, so dass im normalen Betrieb oft ein erheblicher Teil der Abluft wieder benutzt wird. Ferner befindet sich im Abluftkanal AK vor dem Fortluftausgang FO und im Zuluftkanal ZK hinter dem Außenlufteingang AU jeweils eine Luftklappe IV und V.

Solche Lüftungsanlagen sind bekannt und in Fig. 1 schematisch dargestellt. Hierbei sind in Fig. 1 und 2 aus Gründen der Übersichtlichkeit Wärmetauscher, Lufterhitzer und -kühler, Luftentfeuchtungsvorrichtungen und Filter nicht dargestellt. So sind der Abluftkanal AK mit seinem Kanalbereich X und der Zuluftkanal mit seinem Kanalbereich Y durch einen nicht dargestellten Gegenstrom- oder Kreuzstrom-Wärmetauscher hindurchgeführt. Zudem werden alle Klappen vorzugsweise durch Motoren M betätigt.

Ein Ausführungsbeispiel der erfindungsgemäßen Lüftungsanlage für Hallen insbesondere für Hallenbäder ist in Fig. 2 ähnlich Fig. 1 dargestellt, so dass dort auch einige Bauteile fehlen. Als wesentlicher Unterschied zum Stand der Technik ist bei der erfindungsgemäßen Ausführung nach Fig. 2 neu, dass einer der beiden Luftkanäle des Abluftdoppellüfters a, b mit einem K3 der beiden Luftkanäle des Zuluftdoppellüfters c, d über einen Verbindungskanal VK verbunden ist, in dem eine zweite Luftklappe II angeordnet ist. Darüber hinaus ist in dem Teil K2 des Abluftkanals AK, der die Anschlussstelle des Verbindungskanals VK aufweist, eine dritte Luftklappe lila hinter der Anschlussstelle angeordnet ist. Zudem ist in dem Teil K3 des Zuluftkanals ZK, der die andere Anschlussstelle des Verbindungskanals VK aufweist, eine vierte Luftklappe IIIb vor dem Zuluftlüfter c angeordnet.

Die Lüfterventilatoren eines Lüftungsgerätes werden üblicherweise für den Außenluft-Fortluftbetrieb dimensioniert. Diese Betriebsvariante liegt in Hallenbädern allerdings nur in sehr wenigen Betriebsstunden vor. Für die Mehrheit der Betriebsstunden stellt sich ein mittlerer Umluftvolumenstrom ein. Einer der Schwachstellen des herkömmlichen Klappensystems ist der des künstlichen Druckverlustes, den die Umluftklappe I erzeugt. Die Klappe I sorgt dauerhaft für Energieverluste. Ziel der erfindungsgemäßen Belüftungsanlage ist die energetisch ungünstige Prozessführung der Primär-Umluftklappe I zu umgehen. Im Vergleich zu bekannten Anlagen kommen bei der neuen Anlage ein Verbindungskanal VK mit einer Umluftklappe II, im Folgenden Sekundär-Umluftklappe genannt, und zwei Klappen IIa, IIIb zur Abschottung des Umluftlüfter hinzu.

Für den Fall, dass die sekundäre Luftklappe II geöffnet ist, sind die zwei Luftklappen lila, IIIb geschlossen. Außerdem ist der erste Zuluftlüfter c außer Betrieb. Dadurch drückt der Lüfter b Umluft über die sekundäre Klappe II in die Zuluft während der Lüfter a die Fortluft und Lüfter d die Außenluft fördern. Die Primär-Umluftklappe I ist je nach Betriebsführung dabei vorzugsweise geschlossen oder teilweise bis vollständig geöffnet.

Es zeigt sich somit, dass diese Art des Umluftbetriebs ausschließlich mit zwei oder mehr Lüftern je Luftweg möglich ist. Prinzipiell sind Kombinationen aus verschiedenen Lüftern denkbar.

Die möglichen Klappenstellungen sind wie folgt:
- Primär-Umluftklappe I: Öffnungszustand variiert stetig zwischen 0 % und 100 %
- Sekundär-Umluftklappe II: 0 % oder 100 % Öffnung
- Ventilatorklappe Abluft: 0 % oder 100 % Öffnung
- Ventilatorklappe Zuluft: 0 % oder 100 % Öffnung
- Außenluftklappe: Öffnungszustand variiert stetig zwischen 0 % und 100 %
- Fortluftklappe: Öffnungszustand variiert stetig zwischen 0 % und 100 %

Neben dem Vorteil, dass die durch die Primär-Umluftklappe I "gedrosselte" Verbindung zwischen Druck- und Saugseite der Lüfter, bei Umluftbetrieb über die Sekundärklappe, entfällt, zeichnet sich das neue System dadurch aus, dass einer der Zuluftlüfter (im Ausführungsbeispiel der Zuluftlüfter c) stillsteht. Dieser Lüfter ist lediglich bei sehr hohen Umluftanteilen und bei 100 % Außenluftbetrieb notwendig. Somit nimmt die Aufnahmeleistung für die Betriebsstunden ab, in denen die Umluftanteile über die Sekundär-Umluftklappe II ohne "Drosselung" des Luftstromes gefördert werden.

Ein weiterer Vorteil ist, dass die Lüfter bei einer Betriebsvariante nicht in Reihe, sondern parallel betrieben werden. Zum Vergleich, bei bekannten Anlagen befinden sich, bei geöffneter Umluftklappe I, die Abluftlüfter a, b in Reihe zu den Zuluftlüftern c, d. Der Vorteil wird anhand eines Beispiels erläutert:
Es sei ein Betriebspunkt mit 9.200 m³/h und 600 Pa gegeben. Ein sehr gut ausgelegter Lüfter erreicht für diesen Betriebspunkt einen statischen Wirkungsgrad von 66,9 %. Werden zwei dieser Lüfter in Reihe angeordnet, halbiert sich die Druckerhöhung für den einzelnen Lüfter. Der statische Wirkungsgrad fällt auf 62,8 %. Durch das neue Klappensystem wird dieser Betrieb mit reduziertem Wirkungsgrad vermieden.

In den obigen Ausführungen werden die mit "a" bis "d" bezeichneten Teile stets als "Lüfter" bezeichnet. Stattdessen können diese aber auch "Ventilator" genannt werden.

## Patentansprüche

1. Anlage zum Belüften großer Räume und Hallen insbesondere von Schwimmhallen
- mit einem Abluftkanal (AK) mit mindestens zwei zueinander parallel angeschlossenen Abluftlüftern (a, b),
- mit einem Zuluftkanal (ZK) mit mindestens zwei zueinander parallel angeschlossenen Zuluftlüftern (c, d),
- mit einem Umluftkanal (UK), der den Abluftkanal (AK) hinter den ersten Abluftlüftern (a, b) mit dem Zuluftkanal (ZK) vor den Zuluftlüftern (c, d) verbindet, und
- mit einer steuerbaren Umluftklappe (I) im Umluftkanal (UK),
**dadurch gekennzeichnet,**
- **dass** zwischen den Abluftlüftern (a, b) und Zuluftlüftern (c, d) ein Verbindungskanal (VK) angeordnet ist, der mit einem Ende auf der Druckseite eines der beiden Lüfter (b) des Abluftkanals (AK) und mit dem anderen Ende auf der Druckseite eines der beiden Lüfter (c) des Zuluftkanals (ZK) angeschlossen ist,
- **dass** im Verbindungskanal (VK) eine zweite Luftklappe (II) angeordnet ist,
- **dass** in dem Teil des Abluftkanals (AK), der die Anschlussstelle des Verbindungskanals (VK) aufweist, eine dritte Luftklappe (IIIa) hinter der Anschlussstelle angeordnet ist,
- **dass** in dem Teil des Zuluftkanals (ZK), der die andere Anschlussstelle des Verbindungskanals (VK) aufweist, eine vierte Luftklappe (IIIb) vor dem Zuluftlüfter (c) angeordnet ist.

2. Verfahren unter Verwendung einer Anlage nach Anspruch 1 im Normalbetrieb der Anlage zum Belüften eines großen Raums insbesondere einer Halle wie einer Schwimmhalle mit folgenden Einstellungen:
- die zweite Luftklappe (II) ist geöffnet,
- die dritte und vierte Luftklappe (IIIa, IIIb) sind geschlossen,
- der erste Zuluftlüfter (c) steht still, vor dem die vierte Luftklappe (IIIb) angeordnet ist, und
- die Luftklappen und die Lüfter sind so eingestellt und gesteuert, dass der als Zuluft wiederverwendete Teil der Abluft über den Verbindungskanal (VK) zum Zulufteingang (ZE) des Raumes bzw. der Halle strömt.

3. Verfahren nach Anspruch 2, **dadurch gekennzeichnet, dass** die erste Umluftklappe (I) geschlossen oder teilweise geöffnet ist und insbesondere geregelt wird.

4. Verfahren nach Anspruch 2 oder 3, **dadurch gekennzeichnet, dass** der restliche, nicht über den Verbindungskanal (VK) strömende Teil der Abluft zum Fortluftausgang (FA) über den ersten Abluftlüfter (a) strömt, der parallel zu dem zweiten Abluftlüfter (b) liegt, hinter dem der Verbindungskanal (VK) abzweigt.

5. Verfahren nach einem der Ansprüche 2 bis 4, **dadurch gekennzeichnet, dass** die erste Umluftklappe (I) geschlossen oder stark drosselnd eingestellt ist.

6. Verfahren nach einem der vorherigen Ansprüche, **dadurch gekennzeichnet, dass** der als Außenluft dem Raum zugeführte Teil der Zuluft zum Zuluftausgang (ZU) über den zweiten Zuluftlüfter (d) strömt, der parallel zu den ersten Zuluftlüfter (c) liegt, hinter dem der Verbindungskanal (VK) mündet.

7. Verfahren nach einem der vorherigen Ansprüche, **dadurch gekennzeichnet, dass** das die Anzahl der parallel in ZU und AB betriebenen Lüfter größer als jeweils zwei Stück ist.

## Claims

1. Installation for aerating large rooms and halls, in particular indoor swimming pools,
- having an exhaust-air duct (AK) with at least two exhaust-air fans (a, b) which are connected parallel to one another,
- having a supply-air duct (ZK) with at least two supply-air fans (c, d) which are connected parallel to one another,
- having a circulating-air duct (UK) which connects the exhaust-air duct (AK) behind the first exhaust-air fans (a, b) to the supply-air duct (ZK) in front of the supply-air fans (c, d), and
- having a controllable circulating-air flap (I) in the circulating-air duct (UK),
**characterized**
- **in that**, between the exhaust-air fans (a, b) and supply-air fans (c, d), there is arranged a connecting duct (VK) which is connected by one end on the pressure side of one of the two fans (b) of the exhaust-air duct (AK) and by the other end on the pressure side of one of the two fans (c) of the supply-air duct (ZK),
- **in that** a second air flap (II) is arranged in the connecting duct (VK),
- **in that**, in that part of the exhaust-air duct (AK) which has the connection point of the connecting duct (VK), a third air flap (IIIa) is arranged behind the connection point,
- and **in that**, in that part of the supply-air duct (ZK) which has the other connection point of the connecting duct (VK), a fourth air flap (IIIb) is arranged in front of the supply-air fan (c).

2. Method using an installation according to Claim 1 in the normal operation of the installation for aerating a large room, in particular a hall such as an indoor swimming pool, having the following settings:
- the second air flap (II) is open,
- the third and fourth air flaps (IIIA, IIIb) are closed,
- the first supply-air fan (c) is stationary, in front of which the fourth air flap (IIIb) is arranged, and
- the air flaps and the fans are set and controlled in such a way that that part of the exhaust air which is re-used as supply air flows via the connecting duct (VK) to the supply-air inlet (ZE) of the room or hall.

3. Method according to Claim 2, **characterized in that** the first circulating-air flap (I) is closed or partly open and is particularly regulated.

4. Method according to Claim 2 or 3, **characterized in that** the remaining part of the exhaust air, which does not flow via the connecting duct (VK), flows to the outgoing-air outlet (FA) via the first exhaust-air fan (a), which is situated parallel to the second exhaust-air fan (b), behind which the connecting duct (VK) branches off.

5. Method according to one of Claims 2 to 4, **characterized in that** the first circulating-air flap (I) is set so as to be closed or intensely throttling.

6. Method according to one of the preceding claims, **characterized in that** that part of the supply air supplied as outside air to the room flows to the supply-air outlet (ZU) via the second supply-air fan (d), which is situated parallel to the first supply-air fan (c), behind which the connecting duct (VK) opens.

7. Method according to one of the preceding claims, **characterized in that** the number of fans operating in parallel in ZU and AB is greater than two units in each case.

## Revendications

1. Installation pour l'aération de grands locaux et salles, notamment de piscines,
- comprenant un canal d'air d'évacuation (AK) doté d'au moins deux ventilateurs d'air d'évacuation (a, b) raccordés parallèlement les uns aux autres,
- comprenant un canal d'air d'alimentation (ZK) doté d'au moins deux ventilateurs d'air d'alimentation (c, d) raccordés parallèlement les uns aux autres,
- comprenant un canal d'air de circulation (UK), qui relie le canal d'air d'évacuation (AK) après les premiers ventilateurs d'air d'évacuation (a, b) avec le canal d'air d'alimentation (ZK) avant les ventilateurs d'air d'alimentation (c, d), et
- comprenant un clapet d'air de circulation pouvant être commandé (I) dans le canal d'air de circulation (UK),
**caractérisée**
- **en ce qu'**un canal de liaison (VK) est agencé entre les ventilateurs d'air d'évacuation (a, b) et les ventilateurs d'air d'alimentation (c, d), qui est raccordé, par une extrémité, sur le côté refoulement de l'un des deux ventilateurs (b) du canal d'air d'évacuation (AK) et, par l'autre extrémité, sur le côté refoulement de l'un des deux ventilateurs (c) du canal d'air d'alimentation (ZK),
- **en ce qu'**un deuxième clapet d'air (II) est agencé dans le canal de liaison (VK),
- **en ce qu'**un troisième clapet d'air (IIIa) est agencé après le point de raccordement dans la partie du canal d'air d'évacuation (AK) qui comprend le point de raccordement du canal de liaison (VK),
- **en ce qu'**un quatrième clapet d'air (IIIb) est agencé avant le ventilateur d'air d'alimentation (c) dans la partie du canal d'air d'alimentation (ZK) qui comprend l'autre point de raccordement du canal de liaison (VK).

2. Procédé utilisant une installation selon la revendication 1 dans le mode d'exploitation normal de l'installation pour l'aération d'un grand local, notamment d'une salle telle qu'une piscine, avec les réglages suivants :
- le deuxième clapet d'air (II) est ouvert,
- le troisième et le quatrième clapet d'air (IIIa, IIIb) sont fermés,
- le premier ventilateur d'air d'alimentation (c), avant lequel le quatrième clapet d'air (IIIb) est agencé, est immobile, et
- les clapets d'air et les ventilateurs sont réglés et commandés de telle sorte que la partie de l'air d'évacuation réutilisée en tant qu'air d'alimentation s'écoule par l'intermédiaire du canal de liaison (VK) vers l'entrée d'air d'alimentation (ZE) du local ou de la salle.

3. Procédé selon la revendication 2, **caractérisé en ce que** le premier clapet d'air de circulation (I) est fermé ou partiellement ouvert et est notamment réglé.

4. Procédé selon la revendication 2 ou 3, **caractérisé en ce que** la partie restante de l'air d'évacuation, qui ne s'écoule pas dans le canal de liaison (VK), s'écoule vers la sortie d'air évacué (FA) par l'intermédiaire du premier ventilateur d'air d'évacuation (a), qui est situé parallèlement au deuxième ventilateur d'air d'évacuation (b), après lequel le canal de liaison (VK) bifurque.

5. Procédé selon l'une quelconque des revendications 2 à 4, **caractérisé en ce que** le premier clapet d'air de circulation (I) est fermé ou fortement étranglé.

6. Procédé selon l'une quelconque des revendications précédentes, **caractérisé en ce que** la partie de l'air d'alimentation introduite dans le local en tant qu'air extérieur s'écoule vers la sortie d'air d'alimentation (ZU) par l'intermédiaire du deuxième ventilateur d'air d'alimentation (d), qui est situé parallèlement au premier ventilateur d'air d'alimentation (c), après lequel le canal de liaison (VK) débouche.

7. Procédé selon l'une quelconque des revendications précédentes, **caractérisé en ce que** le nombre de ventilateurs exploités en parallèle dans ZU et AB est respectivement supérieur à deux unités.
